Europäisches Patentamt

European Patent Office

Office européen des brevets

(11) Publication number: **0 355 212 B1**

(12) EUROPEAN PATENT SPECIFICATION

(45) Date of publication of patent specification: **08.04.92** (51) Int. Cl.⁵: **A01J 25/00**, A01J 25/16

(21) Application number: **88202642.0**

(22) Date of filing: **23.11.88**

(54) Hardening vat for mozzarella and similar fresh pasta-filata cheese.

(30) Priority: **24.08.88 IT 6777488**

(43) Date of publication of application:
**28.02.90 Bulletin 90/09**

(45) Publication of the grant of the patent:
**08.04.92 Bulletin 92/15**

(84) Designated Contracting States:
**DE ES IT**

(56) References cited:
**EP-A- 0 133 518**
**DE-A- 3 528 221**
**US-A- 3 704 136**

(73) Proprietor: **CMT Costruzioni Meccaniche e Tecnologia S.p.A.**
**via Provinciale 141/A**
**I-12010 Peveragno (CN)(IT)**

(72) Inventor: **Tomatis, Stefano**
**via Provinciale 141**
**I-12010 Peveragno (Cuneo)(IT)**

(74) Representative: **Spandonari, Carlo**
**corso Re Umberto 56**
**I-10128 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention is related to a hardening vat for mozzarella and similar fresh pasta filata cheese.

As is known, fresh pasta filata cheese such as mozzarella, which is obtained by shaping curd that has been made plastic by the action of hot water, has then to be chilled in order to become hard, i.e. in order to change from a plastic condition to a relatively elastic condition, and to such purpose it has to be dipped in chilled water for typical time periods of 15 to 30 minutes.

As the mozzarella is mainly produced in round or pear-shaped pieces, a prolonged stay of the piece of cheese, e.g. lying on the bottom of a vat of chilled water, would cause an undesirable, permanent flattening of the product. Because of this, hardening vats are used where the water and/or the cheese needing hardening are kept moving continuously, so that such flattening cannot take place and become permanent, and also in order to improve the heat exchange between the water and the product.

Some of the prior hardening vats use conveyor belts which set the mozzarella pieces rolling while conveying them underwater. However, such submerged belts, as well as their driving means, are difficult to clean, and are a dangerous potential source of bacterial contamination of the cheese.

In order to overcome such drawback, it has been proposed to circulate a strong water stream thru the vat, and to rely only on the water turbulence to convey and set the mozzarella pieces bouncing along the vat, without the need for conveyor belts. This operating approach, however, has turned out to be unreliable, because the water stream thru the vat allows the mozzarella to accumulate locally, while another fraction of mozzarella are pushed along with excessive speed. Therefore, auxiliary mechanical handlers, such as shovels or the like, have had to be used in such vats, which make all the mozzarella proceed with uniform flow. Such mechanical handlers, however, have in their turn the disadvantage that they squeeze or scratch the product.

EP-A-0 133 518 discloses a hardening vat which tries to dispense with mechanical handlers by using a horizontal plate or table slidably arranged within the vat, and reciprocating at different speeds. When the table moves forward at a slow speed, the product rests on it and is carried along; when the table moves back at a higher speed, the mozzarella is braked by the water resistance and rolls on the table. However, there is considerable rubbing between the product and the ribbed table surface, which necessarily bruises the cheese. Moreover, the hardening vat of EP-A-0 133 518 is difficult and expensive to clean.

It is, therefore, a main object of the invention to provide a water-stream hardening vat, which avoids handling the product with mechanical handlers, which improves the heat exchange between the product and the chilling water, which ensures a uniform dwelling time of each piece in the vat, and which is easy to clean.

The above and other objects, such as will appear from the following disclosure, are attained by the invention with a hardening vat for fresh pasta-filata cheese such as mozzarella, fiordilatte and the like, comprising an elongated vat for water-filling to a predetermined level, with a plate arranged horizontally in the vat below said predetermined level and adapted to move longitudinally under the action of a reciprocating actuator mounted in the vat, with cheese loading means at one end of the vat and withdrawal means at the opposite end, characterized in that the plate is perforated to form a grid and hangs from swinging supports, and in that said actuator is a pusher device adapted to push the grid longitudinally at a first, low speed, and for moving back at a second, higher speed, so that the grid is allowed to fall back to its initial position under the action of gravity.

A preferred embodiment of the invention will now be described, by way of non limiting example, with reference to the attached drawings, wherein:

Fig. 1 is a perspective view of a hardening vat according to said preferred embodiment of the invention;

Fig. 2 is a transverse cross-section view, on an enlarged scale, of the vat of Fig. 1;

Fig. 3 is a transverse cross-sectional detail view, on a further enlarged scale, showing a grid support rod which is part of the hardening vat of Fig. 1; and

Fig. 4 is a longitudinal cross-sectional detail view, on an enlarged scale, of the head area of the vat, showing the feeding movement.

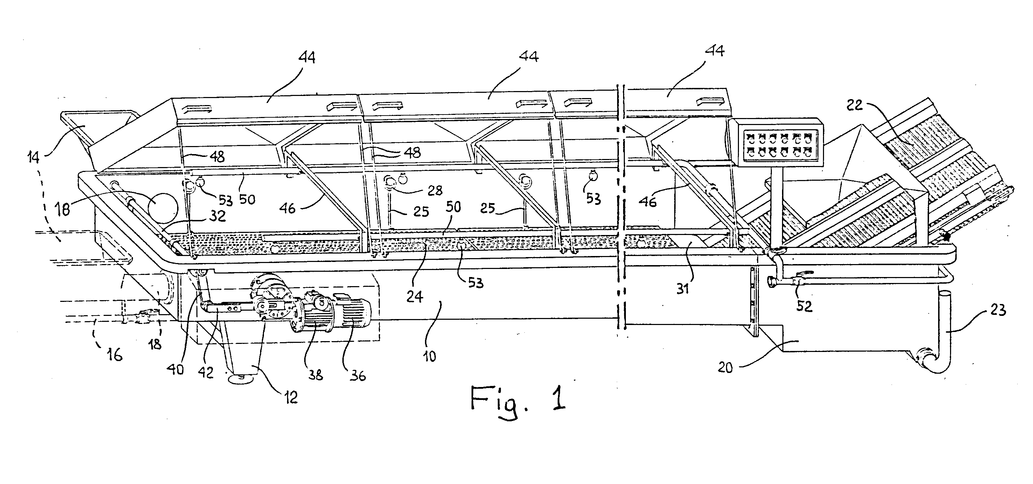

With reference to the Figures of the drawings, a hardening vat 10 according to the invention comprises an elongated, channel-shaped vat having a flat, slightly inclined bottom, resting on feet such as 12, and intended for filling with cold water up to a predetermined level (Fig. 1). A loading hopper 14 for loading mozzarella or fiordilatte in round pieces is arranged laterally at a first end, or loading end, of vat 10 (alternatively, hopper 14 might be mounted at the head, as shown in phantom lines on Fig. 1). Hopper 14 is provided with a pipe 16 opening in one of its walls, and communicates with vat 10 thru a large-diameter conduit 18. Pipe 16 is fed with water through a pump not shown, for generating a water stream sweeping across hopper 14 and entering the vat through conduit 18. At the opposite, or delivery, end, vat 10 has a trench 20 where a metal belt 22, known per se, is obliquely installed for withdrawal of the hardened mozzarella, and driven at a uniform speed by motor means not visible in the Figures. A vertical overflow pipe leads from the bottom of trench 20.

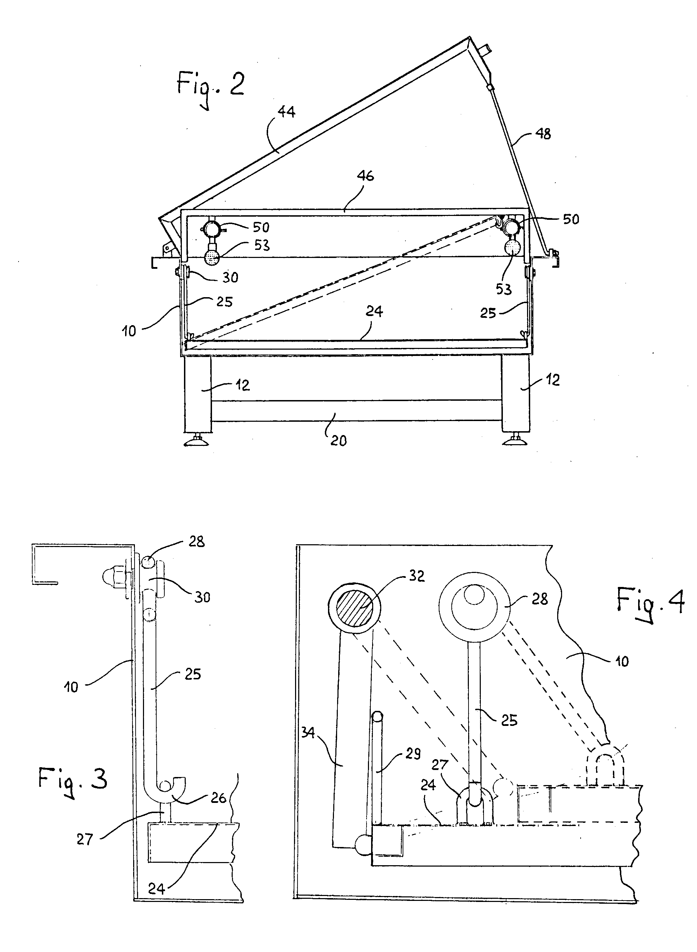

According to the invention, a flat grid 24 is horizontally arranged in vat 10, extending across the entire width and susbstantially through the entire length of the vat. Grid 24 preferably comprises a number of sheets of perforated plate, coupled to each other and hanging from rods 25, each having a hook at its nether end for connection with eyes 27 integral with grid 24, and an eye 28 at its upper end, for connection to brackets 30 projecting from the side walls of the vat (see also Fig. 3). The length of rods 25 is such that the grid is normally held at a low height above the vat bottom, as seen in Fig. 2.

Grid 24 is therefore able to swing, thus changing its height above the vat bottom, though preserving its horizontal arrangement.

Grid 24 is provided with a vertical, perforated rib 29 at its front edge (see Fig. 4). A skid 31 is coupled to the rear edge of the grid, in the transition area to the withdrawal belt 22, comprising a metal sheet having its free edge resting upon the side guides of the withdrawal belt.

A pusher device for grid 24 is arranged at the loading end of vat 10, comprising a rotatably supported shaft 32 extending across vat 10 and provided with two rods 31 extending downwardly from shaft 32 to abut against the front edge of grid 24 (see particularly Fig. 4). Shaft 32 is driven by a two-speed electric motor 36 with reduction gear 38, through a crank gear 40, 42, so that the rotation of motor 36 drives shaft 32 to swing from the position shown to the position shown in dotted lines in Fig. 4.

It is seen that rods 34 act as a pusher device upon grid 24, pushing it toward the delivery end. In performing such movement, grid 24 rises, because of the constraints imposed on it, and then cyclically falls back to the low position. However, the motor is programmed for turning at a slow speed during the forward movement of grid 24, and at a fast speed during the backward movement of grid.

In the operation of the hardening vat, the product requiring hardening, such as round mozzarella pieces, is gradually loaded into hopper 14, either manually or by means of mechanical loading means (not shown), and is then pushed into the vat by the water stream entering the vat through conduit 18. The product then comes to rest onto grid 24. When the grid slowly rises, it lifts along the product resting on the grid, while the water which was above the grid sifts under it through the holes, the relative speed between the water and the product improving the heat exchange and therefore the rate of chilling of the cheese. At the same time the cheese, moving together with the grid, is now nearer to the delivery end.

When grid 24 falls back swiftly, the mozzarella pieces, having a specific weight slightly greater than water, momentarily float, aided by the upward thrust of the water flowing through the holes in the grid. Thereafter, the mozzarella pieces again fall back to rest on the grid, in a more advanced position than they were before the swing. Moreover, since the mozzarella pieces generally turn over while floating, they will lie down in a posture or orientation different from the previous one.

As the swings of the grid cyclically repeat, the product each time will advance a short trip along the vat, and each time the pieces will momentarily float in the moving water (due to the flow through the grid), with an improvement of the heat exchange with the water. The cheese is never handled roughly, either by mechanical handlers or by brisk water streams. When the mozzarella pieces reach the delivery end of the grid, they roll down skid 31 and are caught onto withdrawal belt 22.

The top of vat 10 is protected over its entire length by means of liftable covers 44, resting on bridge supports 46 and shown in a propped up position, held on struts 48. Further, vat 10 is provided with pipes 50 extending along its longitudinal upper sides and supplied with high-pressure hot water and/or detergent solutions through a tap 53, from a cleaning unit not shown. Pipes 50 are provided with rose spouts 53 for automatic washing, with lowered covers 48, as known per se. During cleaning, the sheets comprising the grid can be hung obliquely from hooks 54 fastened to the bridge supports 46, as shown in dashed lines in Fig. 2.

## Claims

1.  A hardening vat for fresh pasta-filata cheese such as mozzarella, fiordilatte and the like, comprising an elongated vat (10) for waterfilling to a predetermined level, with a plate (24) arranged horizontally in the vat below said predetermined level and adapted to move longitudinally under the action of a reciprocating actuator (32-42) mounted in the vat, with cheese loading means (14, 16, 18) at one end of the vat and withdrawal means (20, 22) at the opposite end, characterized in that the plate (24) is perforated to form a grid and hangs from swinging supports (25-30), and in that said actuator (32-42) is a pusher device adapted to push the grid longitudinally at a first, low speed, and for moving back at a second, higher speed, so that the grid (24) is allowed to fall back to its initial position under the action of gravity.

2. The hardening vat of claim 1, further characterized in that a skid (31), inclined toward the withdrawal means, is hinged to the delivery edge of the grid.

3. The hardening vat of claim 1 or 2, further characterized in that said pusher device comprises a shaft (32) rotatably supported across the vat and driven with alternate movement by driving means (36-42), said shaft having at least an integral rod (34) extending therefrom and having its end abutting against the edge of the grid.

4. The hardening vat of claim 3, further characterized in that said driving means comprise variable-speed motor means (36), driving said shaft through a crank gear (40, 42).

5. The hardening vat of one of claims 1-4, further characterized in that said swinging supports comprise rods (25) hinged at their opposite ends to the grid and to the side walls of the vat, respectively.

**Revendications**

1. Réservoir de solidification de fromages frais du type pasta filata, tels que mozzarella, fiordilatte, etc., comprenant un réservoir allongé (10) destiné à être rempli d'eau jusqu'à un niveau prédéterminé, avec une plaque (24) arrangée horizontalement dans le réservoir au dessous dudit niveau prédéterminé, et en mesure de se déplacer longitudinalement sous l'action d'un actuateur alternatif (32-42) installé dans le réservoir, avec des moyens de chargement de fromage (14, 16, 18) à une extrémité du réservoir et des moyens d'extraction de fromage (20, 22) à l'autre extrémité, caractérise en ce que la plaque (24) est perforée pour constituer une grille et qu'elle dépend de supports oscillants (25-30), et en ce que ledit actuateur (32-42) est un dispositif de poussée, en mesure de pousser la grille longitudinalement à un première vitesse basse, et de se rétirer à une deuxième vitesse plus élevée, pour permettre à la grille de retomber vers sa position initiale sous l'effet de la gravité.

2. Réservoir de solidification selon la revendication 1, caractérisé en plus en ce qu'au bord de débit de la grille est articulé un poulain (31) incliné vers les moyens d'extraction.

3. Réservoir de solidification selon la revendication 1 ou 2, caractérisé en plus en ce que ledit dispositif de poussée comprend un arbre (32) tournant trasversalement au réservoir et conduit avec un mouvement alternatif par des moyens moteurs (36-42), ledit arbre ayant au moins une tige intégrale (34) qui s'étend de la tige et dont l'extrémité s'appuie contre le bord de la grille.

4. Réservoir de solidification selon la revendication 3, caractérisé en plus en ce que les dits moyens moteurs comprennent des moyens moteurs (36) à vitesse variable, qui entraînent ledit arbre par l'intermédiaire d'un mécanisme à manivelle (40, 42).

5. Réservoir de solidification selon une des revendications 1 à 4, caractérisé en plus en ce que lesdits supports oscillants comprennent des tiges (25) articulées à leurs extrémités opposées respectivement à la grille et aux parois latérales du réservoir.

**Patentansprüche**

1. Verfestigungsbehälter für Pasta-Filata-Frischkäse, wie Mozzarella, Fiordilatte und dgl., umfassend einen langgestreckten Bottich (10), der bis zu einer vorbestimmten Füllhöhe mit Wasser füllbar ist, mit einer im Bottich waagerecht unter der vorbestimmten Füllhöhe angeordneten Platte (24), die unter der Wirkung eines im Bottich montierten, hin- und hergehend wirkenden Betätigungsglieds (32-42) in Längsrichtung bewegbar ist, mit einer Käseladeeinrichtung (14, 16, 18) am Ende des Bottichs und einer Entnahmeeinrichtung (20,22) am anderen Ende, dadurch gekennzeichnet, daß die Platte (24) unter Bildung eines Rosts perforiert ist und von Schwingträgern (25-40) herabhängt und daß das Betätigungsglied (32-42) eine Stoßvorrichtung ist, welche den Rost mit einer ersten, niedrigen Geschwindigkeit in Längsrichtung zu stoßen und ihn mit einer zweiten, höheren Geschwindigkeit zurückzubewegen vermag, so daß der Rost (24) unter Schwerkrafteinfluß in seine Ausgangsstellung zurückfallen kann.

2. Verfestigungsbehälter nach Anspruch 1, dadurch gekennzeichnet, daß an der Liefer- oder Austragkante des Rosts eine in Richtung auf die Entnahmeeinrichtung geneigte Kufe (31) angelenkt ist.

3. Verfestigungsbehälter nach Anspruch 1 oder 2, dadurch gekennzeichnet, daß die Stoßvorrichtung eine quer über dem Bottich drehbar gelagerte und durch eine Antriebseinrichtung (36-42) mit Wechselbewegung angetriebene Welle (32) aufweist, die mindestens eine materialeinheitlich an ihr angebrachte und von ihr abgehende Stange (34), deren Ende an der Kante des Rosts anliegt, aufweist.

4. Verfestigungsbehälter nach Anspruch 3, dadurch gekennzeichnet, daß die Antriebseinrichtung eine Motoreinheit (36) mit variabler Drehzahl, welche die Welle über einen Kurbeltrieb (40,42) antreibt, umfaßt.

5. Verfestigungsbehälter nach einem der Ansprüche 1 bis 4, dadurch gekennzeichnet, daß die Schwingträger Stangen (25) umfassen, die mit ihren gegenüberliegenden Enden am Rost bzw. an den Seitenwänden des Bottichs angelenkt sind.

Fig. 1

Fig. 2

44

48

46

50

53

30

10

25

25

53

24

12

12

20

28

30

10

25

Fig. 3

26

27

24

32

28

Fig. 4

10

34

29

25

27

24